# EUROPEAN PATENT APPLICATION

(11) **EP 4 818 053 A1**
(43) Date of publication of application: **07.10.2026**
(21) Application number: 26169508.4
(22) Date of filing: 31.03.2026
(51) Int. Cl.: B64G 1/64, B64G 1/22, B64G 4/00, E05D 1/00, H01R 13/52, H01R 24/78

(54) **COVER APPARATUS AND COVER SYSTEM FOR PROTECTING VULNERABLE COMPONENTS IN A SPACE ENVIRONMENT**

(30) Priority: 31.03.2025 US 202563781108 P
(71) Applicant: MacDonald, Dettwiler and Associates Inc., Brampton, Ontario L6Y 6K7 (CA)
(72) Inventor: WALTON, Cody, Brampton, L6Y 6K7 (CA); KANJI, Shahil Salim, Brampton, L6Y 6K7 (CA); HONEYBROWN, Michael Robert, Brampton, L6Y 6K7 (CA); BOERMANS, Lucas, Brampton, L6Y 6K7 (CA)
(74) Representative: Worsley, Theo Morgan

(57) **Abstract**

A cover apparatus (100) and cover system for protecting a vulnerable component in space from environmental damage is provided. The cover apparatus includes a cover (114) that rotates about a pivot point (120-1, 120-2) between a closed position (Fig. 1a) and an open position (Fig. 1c), a spring mechanism or biasing member (122-1, 122-2) that biases the cover in the closed position, and an actuation tab fixed to the cover and positioned above the cover in the closed position. Applying a push force on the actuation tab rotates the cover about the pivot point to the open position, the push force being sufficient to overcome a spring force of the spring mechanism. The rotation of the cover to the open position loads the spring mechanism. The cover rotates passively from the open position to the closed position using the load in the spring mechanism when the push force on the tab is removed.

## Description

### Technical Field

The following relates generally to cover systems, and more particularly to cover systems for protecting vulnerable components in a space environment.

### Introduction

In space applications, system and device components used in operations may be exposed to environmental factors that can damage the components. Such factors may include, for example, atomic oxygen, radiation, and micro-orbital debris. Damage to these components may render them unusable. It is thus often desired to protect such vulnerable components from environmental damage by limiting exposure of the components to the elements. This may include covering the components as much as possible and providing access to the components only when needed. When designing a cover system, it is often desired to reduce the number of components (both electrical and mechanical), complexity, and mass due to constraints in the space environment.

Robotic operations in space often require the mating of components across a separable interface. Typically, in such an interface, a first set of components (or connectors) is located on a robotic device, such as an end effector driven by a robotic arm, which mate with a second set of components (or connectors) on a payload. Once mated, the robotic device provides a service to the payload across the separable interface, such as the provision of electrical power, data, or fuel, or simply the manipulation of the payload. Such a separable interface is repeatably separable in the sense that the interface is designed to be mated and de-mated multiple times to enable the provision of services to the payload at multiple instances over time. In one particular example, a robotic device and a payload may have complementary electrical connectors designed to mate and transfer electrical power or data across the mated interface.

To ensure the continued integrity of such mating interfaces, it is necessary to protect mating connectors on payloads in space environments when not in use from various environmental factors that can compromise performance and operation of the connectors. Such factors include, for example, atomic oxygen, radiation, and micro-orbital debris. The challenge then becomes providing a solution that protects the mating connectors when not in use while providing access to the mating connectors during mating operations. As robotic operations in the space environment (e.g., on orbit) are expensive and time-consuming, a solution is desired that provides selective access and protection to the connectors while keeping the robotic operations as simple as possible.

Accordingly, there is a need for an improved cover and cover system for protecting vulnerable components in space that overcomes at least some of the disadvantages of existing systems and apparatuses.

### Summary

A cover apparatus for protecting a vulnerable component in space from environmental damage is provided. The cover apparatus includes: a cover that rotates about a pivot point between a closed position and an open position; a spring mechanism that biases the cover in the closed position; an actuation tab fixed to the cover and positioned above the cover in the closed position; wherein applying a push force on the actuation tab rotates the cover about the pivot point to the open position, the push force being sufficient to overcome a spring force of the spring mechanism; wherein the rotation of the cover to the open position loads the spring mechanism; and wherein the cover rotates passively from the open position to the closed position using the load in the spring mechanism when the push force on the tab is removed.

In some embodiments, the spring mechanism comprises a torsion spring disposed about the pivot point.

In some embodiments, the vulnerable component is on a repeatably separable robotic interface.

In some embodiments, the repeatably separable robotic interface includes a robotic device and payload, and the vulnerable component is a payload-side connector configured to mate with a robot-side connector on the robotic device as part of a robotic mating operation.

In some embodiments, the push force is supplied by an actuation bracket on the robotic device as the robotic device approaches the payload during the robotic mating operation.

In some embodiments, the push force required to open the cover and fully expose the payload-side connector is within a deadband of a force senor of the robotic device that senses forces during mating of the payload-side and robot-side connectors.

In some embodiments, the cover is circular shaped with the center of its radius coincident with an axis of rotation of the cover defined by the pivot point.

In some embodiments, the cover and actuation tab are counterbalanced using a counterweight to reduce movement of the cover in a launch environment. In some embodiments, the cover and actuation tab are counterbalanced using a counterweight that reduces movement of the cover in a launch environment.

In some embodiments, the counterweight positions the center of rotating mass of the cover and actuation tab coincident with an axis of rotation of the cover defined by the pivot point.

In some embodiments, the center of mass of the counterweight is directly opposite the center of mass of the cover and actuation tab through the pivot point.

In some embodiments, the cover apparatus further includes first and second swing arms that are fixed to the cover and are pivotably attached to and rotate about the pivot point.

In some embodiments, the spring mechanism is preloaded in the closed position.

In some embodiments, the spring mechanism is disposed in a groove, and the apparatus further comprises an undercut feature for retaining the spring mechanism in the groove.

In some embodiments, the actuation tab is angled forward from vertical in the closed position.

A cover system is also provided that includes the cover apparatus and an actuation bracket configured to apply the push force to the actuation tab.

In some embodiments, the actuation bracket is mounted on a robotic device and is robotically delivered by the robotic device during a robotic mating operation involving the vulnerable component.

In some embodiments, the push force required to rotate the cover to the open position is within a deadband of a force sensor on the robotic device that senses forces during the robotic mating operation.

An apparatus for protecting a payload-side connector on a payload from elements in a space environment when not mating to a robot-side connector on a robotic device according to a robotic mating procedure is also provided. The apparatus includes: a cover for covering the payload-side connector, wherein the cover revolves about a pivot point and is biased in a closed position; wherein the cover opens to expose the payload-side connector by rotating about the pivot point in a first direction when a linear actuation force is applied on an actuation tab above and attached to the cover, the rotation of the cover loading torque in the torsion spring; wherein the cover closes passively by rotating about the pivot point in a direction opposite the first direction using the torque loaded in the torsion spring when the linear actuation force on the actuation tab is removed.

In some embodiments, the cover is biased in the closed position by a biasing member disposed about the pivot point, and the biasing member is configured to provide force characteristics that keep the actuation force required to open the cover and fully expose the payload connectors within a deadband of a force sensor of the robotic device that senses forces during mating of the payload-side and robot-side connectors. In some embodiments, the biasing member is a torsion spring.

In some embodiments, the cover is counterbalanced using a counterweight to reduce movement of the cover during launch.

In some embodiments, the counterweight positions the center of rotating mass of the cover coincident with the axis of rotation.

In some embodiments, the center of mass of the counterweight are directly opposite the center of mass of the cover and actuation tab through the pivot point.

In some embodiments, the actuation tab is angled forward from vertical.

In some embodiments, the cover provides no direct line of sight from the payload-side connectors to the space environment when closed.

In some embodiments, the actuation tab comprises two side walls that are perpendicular to a target surface of the actuation tab.

In some embodiments, the cover further comprises two side walls configured to protect against environmental damage.

In some embodiments, the cover provides no direct line of sight from the payload-side connectors to the space environment when closed.

A system for protecting a payload-side connector on a payload from elements in a space environment when not mating to a robot-side connector on a robotic device according to a robotic mating procedure is also provided. The apparatus includes: a cover apparatus mounted on the payload, the cover apparatus comprising: a pair of swing arms pivotably attached to the payload at first and second pivot points; a cover fixedly attached to the swing arms such that the cover rotates with the swing arms, the cover for covering the payload-side connectors when closed; an actuation tab fixedly attached to a top edge of the cover; first and second torsion springs disposed about the first and second pivot points, respectively, the first and second torsion springs biasing the cover apparatus closed; and an actuation bracket mounted to the robotic device; wherein the actuation bracket pushes the actuation tab in the direction of travel of the robotic device with an actuation force sufficient to rotate the cover apparatus open about the first and second pivot points and load torque in the first and second torsion springs; and wherein, upon removal of the actuation force by the actuation bracket, the first and second torsion springs release the stored torque and the cover apparatus rotates about the about the first and second pivot points to close.

A system for use in a zero gravity or microgravity space environment is also provided. The system includes: a robotic device comprising (i) an end effector having a robot-side connector for mating with a payload-side connector according to a robotic mating procedure, (ii) a force moment sensor for sensing forces and moments at the end effector during the robotic mating procedure; and (iii) an actuation bracket extending past the robot-side connector; a payload comprising (i) a payload-side connector for mating with the robot-side connector and (ii) a cover apparatus on the payload for protecting the payload-side connector when not mating to the robot-side connector, wherein the cover apparatus revolves about a pivot axis between open and closed positions and is preloaded in the closed position by torsion springs; wherein the cover apparatus is opened using a force from the end effector applied by the actuator bracket to the cover apparatus during the robotic mating procedure, the force being within a deadband of the force moment sensor and sufficient to load torque in the torsion springs; and wherein the cover apparatus closes passively by release of the torque loaded in the torsion springs as the robotic device is retracted to de-mate the robot-side connector from the payload-side connector.

In some embodiments, the cover apparatus provides no direct line of sight from the payload-side connector to the space environment when closed.

An apparatus for protecting a vulnerable component in a zero gravity or microgravity space environment when not being used is also provided. The apparatus includes: a cover that (i) opens by rotating around a pivot point when a linear actuation force is applied to a tab above the cover, the linear force being sufficient to load a spring mechanism that biases the cover closed; and (ii) closes passively about the pivot point using energy released from the spring mechanism as the linear actuation force on the tab is removed.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figures 1A-1B are front and rear perspective views of a cover apparatus for protecting and exposing vulnerable components in a space environment, in a closed configuration, according to an embodiment;
Figures 1C-1D are front and rear perspective views of the cover apparatus of Figures 1A-1B, in an open configuration;
Figure 2A is a perspective view of a system for covering and uncovering a set of mating connectors on a separable robotic interface including the cover apparatus of Figures 1A-1D, with the cover apparatus in a closed configuration, according to an embodiment;
Figure 2B is a rear perspective view of the system of Figure 2A with the cover apparatus in an open configuration;
Figure 3 is a side view of the cover apparatus of Figures 1A-1B in isolation illustrating an angle of the actuation tab, according to an embodiment;
Figure 4 is a partially transparent side view of the cover apparatus and payload of Figure 1A-1B in isolation illustrating details of a spring mechanism for passively returning the cover apparatus to the closed position, according to an embodiment; and
Figure 5 is a perspective view illustrating an undercut feature for retaining a spring leg of the spring mechanism of Figure 4 in a groove of a swing arm, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

The following relates generally to cover systems, and more particularly to cover systems for protecting vulnerable components in a space environment. In one embodiment, the vulnerable components are part of a repeatably separable robotic interface. The present disclosure further relates to a cover for protecting mating connectors in a space environment that is easy to open and that closes passively during disconnection of the mating interface.

The present disclosure provides a revolving cover for protecting vulnerable components in a space environment from environmental factors that may cause damage to the components. The cover revolves about a pivot point or axis of rotation between a closed position and an open position. The cover is biased in the closed position by a spring mechanism or biasing member (or biasing element). The spring mechanism may include one or more very pliant springs. The cover is opened by applying an external actuation force to an actuation tab connected to and positioned above the cover. As the cover rotates open, the spring mechanism becomes loaded and stores elastic potential energy. When the external actuation force is removed, the energy stored in the spring is released and rotates the cover to the closed position. The cover may provide particular advantages, including a reduction in components (both mechanical and electrical) and thus complexity and potentially mass, all of which are constrained in the space environment.

In an embodiment, the present disclosure provides a revolving cover for protecting mating connectors on a separable robotic interface in a space environment from environmental factors such as atomic oxygen, radiation, and micro-orbital debris. The cover revolves around a pivot point or axis of rotation and is preloaded in a closed position by very pliant torsion springs. The cover passively closes using the torque loaded in the torsion springs as the separable robotic interface is unmated. The cover is opened on orbit using a very small amount of force from the end effector (e.g., less than 3N). The cover opens while mating a payload to a robotic interface without any additional robotic operation steps. The force required from the end effector to open the cover is small enough that it is within the noise or deadband of the force sensors on the end effector. This allows robotic operations to be kept as simple as possible and for the cover to have no impact on the robotic mating operation (e.g., without changing the mating force and position accuracy of the end effector during the robotic mating procedure). The cover is also designed to accommodate misalignment between the end effector and the cover, thereby obviating the need for additional targets or accuracy. The cover may be counterbalanced using counterweights to survive violent vibrations and forces experience during launch.

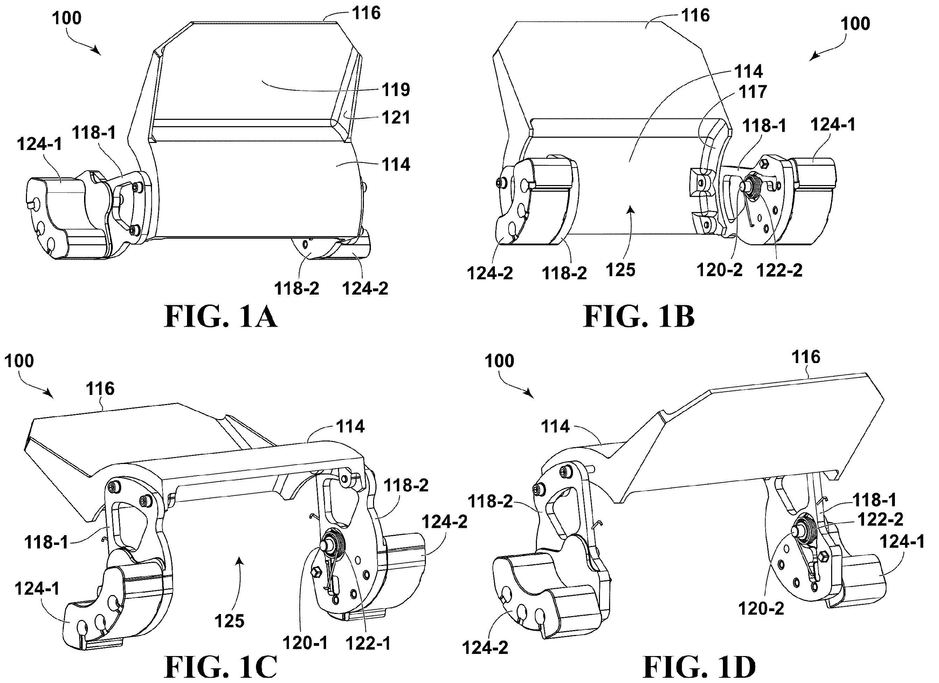

Referring now to Figures 1A-1D, shown therein is a cover apparatus 100 for protecting vulnerable components from environmental damage, according to an embodiment.

The cover apparatus 100 may be used in a space environment to protect components from environmental factors that may cause damage to the components if uncovered/exposed, such as, for example, radiation, atomic oxygen, and foreign object debris (e.g., micro-orbital debris). The space environment may be a zero gravity or microgravity environment.

The cover apparatus 100 includes a cover 114, an actuation tab 116 above the cover 114, swing arms 118-1 and 118-2 (also referred to as rotating arms), pivot pins 120-1 and 120-2, torsion springs 122-1 and 122-2, and counterweights 124-1, and 124-2.

The cover apparatus 100 pivots or rotates between a closed position (Figures 1A-1B) and an open position (Figures 1C-1D). In the closed position, the cover 114 covers a protected area 125 behind the cover 114 and between the swing arms 118. Generally, the cover apparatus 100 may be mounted on a structure, platform, or object that contains one or more vulnerable components to be covered by the cover apparatus 100 such that the vulnerable components are positioned in the protected area 125.

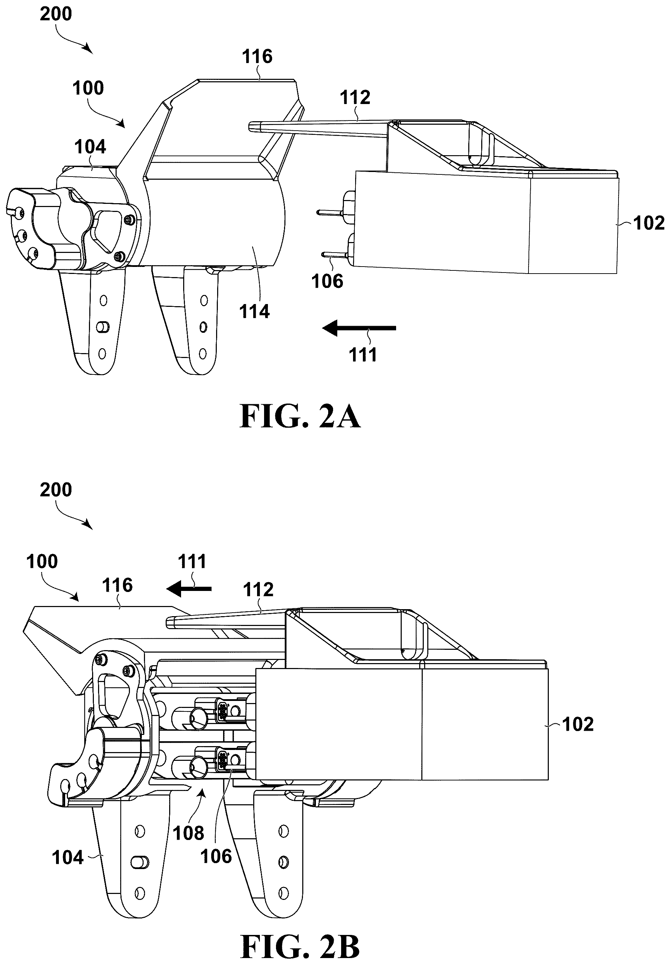

The cover 114 is fixedly attached to the swing arms 118 and the swing arms 118 pivot or rotate about the pivot pins 120, which define an axis of rotation of the cover apparatus 100. The pivot pins 120 are inserted into a non-rotating support structure (e.g., payload 104 in Figures 2A-2B) which allows the swing arms 118, and thus the cover 114, to pivot about the non-rotating structure. For example, the pivot pins 120 may be inserted into respective pivot bores in the non-rotating support. The term "non-rotating" in this context refers to the support providing a fixed or stationary structure about which the cover apparatus 100 rotates. Generally, the non-rotating support provides a stationary mounting point for the cover apparatus 100 and may be a structure containing the vulnerable component, such as a platform on which the vulnerable component is disposed. In other embodiments, the cover 114 may be attached to the non-rotating support in any manner that enables the cover 114 to pivot about the non-rotating support between the closed and open positions.

The cover 114 is sized and dimensioned to provide cover and protection to the vulnerable component in the closed position. The cover 114 is circular shaped with the center of the radius coincident with the axis of rotation. In other embodiments, the cover 114 may be another shape. The cover 114 may be of any shape suitable to effectively cover the vulnerable component while also rotating about the axis of rotation. The cover 114 may include side walls 117 as in Figure 1B. The side walls 117 provide additional cover to protected components against environmental damage coming from the sides. The side walls 117 also provide a mounting point for the side arms 118.

The actuation tab 116 provides a target surface 119 for receiving an actuation force (e.g., actuation force 111 depicted in Figure 2B) to open the cover apparatus 100. The actuation force is a linear force (i.e., a push force) applied to the target surface 119 that is sufficient to overcome the spring force of the torsion springs 122 that otherwise bias the cover apparatus 100 closed. The actuation force may be supplied by a cover manipulator, which may be, for example, a human, an instrument, or an actuation finger or bracket specifically designed to work with the cover apparatus 100 (e.g., actuation bracket 112 of Figures 2A-2B). The actuation tab 116 is fixedly connected to the cover 114 such that when the actuation force is applied to the target surface 119 of the actuation tab 116, the cover 114 and actuation tab 116 rotate as one about the axis of rotation. The actuation tab 116 may be positioned above the cover 114 (e.g., on or near a top edge of the cover 114. In an embodiment, the actuation tab 116 is disposed on cover 114 such that the actuation tab 116 is directly opposite a counterweight (e.g., counterweights 124-1, 124-2, described below) and such that actuation of the tab 116 (in direction 111 of Figure 2B) rotates the cover 114 open. In an embodiment, the cover 114 and actuation tab 116 are integrally formed as a single piece. The actuation tab 116 may include side walls 121 to provide strength/stiffness to the actuation tab 116.

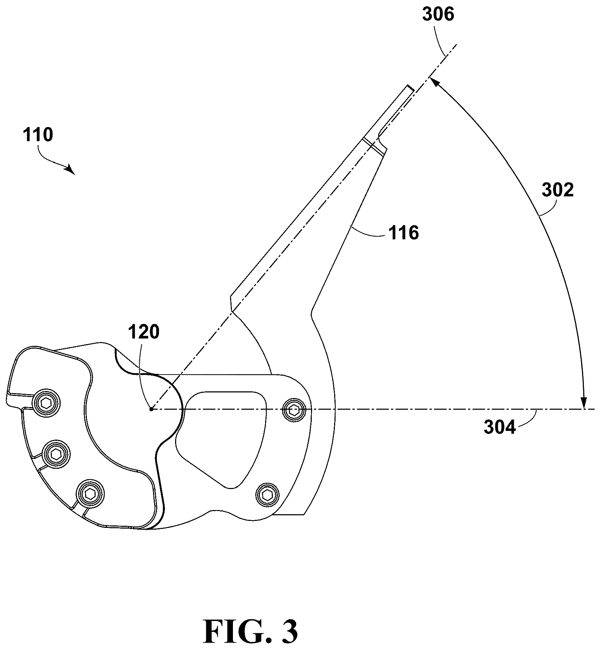

The actuation tab 116 may be leaned forward from vertical (perpendicular) when the cover apparatus 100 is in the closed position, as in the embodiment of Figures 1A-1D. This concept is illustrated in Figure 3, which shows an angle 302 formed between axis 304 and axis 306 that is less than 90 degrees. In an embodiment, the angle 302 may be approximately 50 degrees. While both axes 304, 306 go through pivot point 120, this may not be the case. Axis 304 may be based on the normal direction of the mounting surface of the non-rotating support to which the cover apparatus 100 is pivotably attached (e.g., payload 104 of Figures 2A-2B). In embodiments where the vulnerable component is a mating connector, axis 304 may be a connector insertion axis. Forward leaning the actuation tab 116 in this manner may advantageously minimize force actuation. This keeps the moment arm to the pivot point small. If the actuation tab 116 is vertical, the actuation force supplier (such as actuation finger 112 of Figures 2A-2B) may hit a lower point on the actuation tab 116 when opening the cover apparatus 110. By angling the actuation tab 116 forward, force and friction are reduced. The selected angle 302 may be an optimum angle as a trade-off of height and moment arm force (i.e., the most efficient angle to reduce the forces).

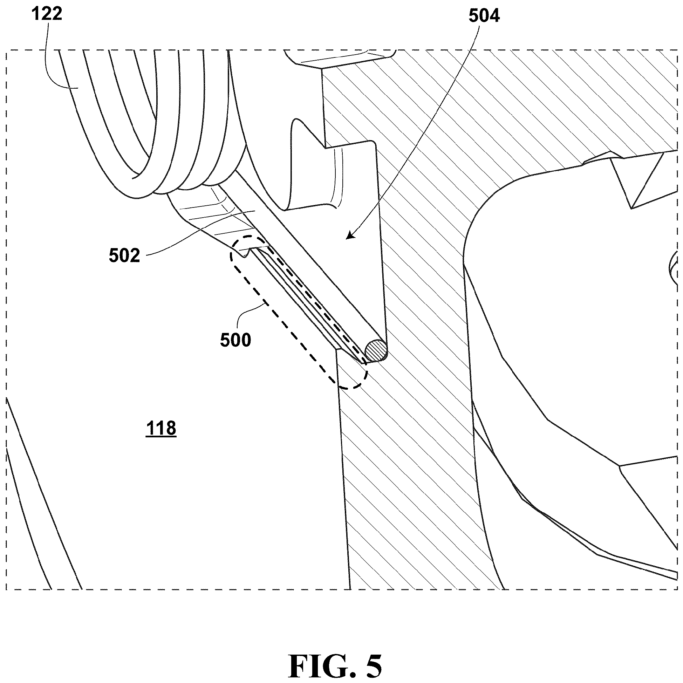

The torsions springs 122-1, 122-2 are disposed about pivot pins 120-1, 120-2. Each torsion spring 122 includes a stationary leg and a moving leg. The stationary leg is attached to the non-rotating support and the moving leg is attached to the side arm 118. The torsion springs 122 may be disposed in respective grooves on the swing arms 118. In an embodiment, the groove may include an undercut feature for retaining the leg of the torsion spring 122 undercut. Figure 5 illustrates an example undercut feature 500. The undercut feature 500 may be machined using a cutter such as those typically used to make O-ring grooves (dovetail cutter). The undercut feature 500 retains spring leg 502 of spring 122 in groove 504. The undercut feature 500 may be used along with preload of the spring 122 to retain spring leg 502. The undercut feature 500 may provide advantages over other approaches to spring leg 502 retention, such as a plate that bolts on to side arm 118 to prevent the spring leg 502 from falling out of the groove 504.

The torsion springs 122 are configured to bias the cover assembly 100 into the closed position (i.e., when an actuation force is applied to the actuation tab 116). The torsion springs 122 become loaded as the cover apparatus 100 rotates open about its rotational axis. The release of the spring load in the torsion springs 122 rotates the cover assembly 100 closed about its rotational axis.

In other embodiments, the torsion springs 122 may be replaced by another spring mechanism or biasing member. Generally, the spring mechanism may be any spring mechanism or biasing element that stores elastic potential energy as the cover apparatus 100 rotates open and releases the stored elastic potential energy to rotate the cover apparatus 100 closed. The spring mechanism may be configured to provide force characteristics that keep the actuation force required to open the cover apparatus 100 sufficiently low (i.e., very pliant springs).

In an embodiment, the spring mechanism may include at least one coil spring. The coil spring may be a torsion spring (as in cover apparatus 100). The coil spring may be a compression spring. In a particular embodiment, the compression spring may include a link attached to swing arm 118 that pushes a piston into a cylinder with the compression spring in the cylinder as the cover opens. The coil spring may be an extension spring. In a particular embodiment, the extension spring may be implemented with one end attached to the swing arm 118 and one end attached to the fixed structure.

In an embodiment, the spring mechanism may include at least one flat spring. The flat spring may be a leaf spring. The flat spring may be a cantilever spring. The flat spring may be a clock spring. The clock spring may be disposed around the pivot point in a similar manner to torsion springs 122.

The torsion springs 122 may be preloaded in the closed position. This means that when the cover apparatus 100 is in the closed position, the torsion springs 122 are compressed a relatively small amount. For example, the torsion springs 122 may be compressed approximately 20 degrees. Without the preload, the spring legs of the torsion spring 122 may fall out of their respective grooves in which they are mounted if subjected to significant vibrations, such as may be experienced during launch, and cause the cover apparatus 100 to jam. Jamming may render the vulnerable component inaccessible, which can be particularly problematic in space applications where fixing or replacing the cover is not practical.

While the use of a very pliant spring mechanism for passively closing the cover apparatus 100 enables the actuation force required to open the cover apparatus 100 to be kept low, this can present challenges in the launch environment. A very pliant spring mechanism may result in the cover apparatus 100 having a very low natural frequency that can be excited in the launch environment and cause resonance and structural damage. Increasing the natural frequency to a suitable level may not always be an option. Therefore, a solution was desired that eliminated any force on the spring mechanism in the launch environment.

To address this challenge, the cover apparatus 110 also includes counterweights 124-1 and 124-2. The counterweights 124 are attached to the side arms 118-1 and 118-2, respectively. The counterweights 124 position the center of rotating mass of the cover apparatus 100 directly on the axis of rotation. The counterweights 124 counteract the weight of the actuation tab 116. The counterweights 124 are disposed such that the counterweight 124 center of mass is directly opposite or across from the center of mass of the actuation tab 116 and cover 114 (through pivot point 120). The counterweight 124 may be shaped to get the center of gravity of the counterweight 124 at the right spot. The counterweight 124 may also provide advantages for 0G testing of the cover apparatus 100 in a 1G environment. When in 1G, the counterweight 124 counterbalances the weight of the actuation tab 116 and cover 114, thereby allowing the actuation force required to open the cover apparatus 100 in 0G to be simulated. Without the counterweight 124, the effects of gravity would make the cover apparatus 110 harder to open than in 0G, which may add complexity to testing.

The solution provided by the counterweights 124 is somewhat counterintuitive since the counterbalancing makes the natural frequency of the cover apparatus 100 even less desirable by adding weight but makes the natural frequency un-excitable in the launch environment and therefore solves the problem. Vibration tests were performed that show the counterweights 124 drastically reduce the movement of the cover apparatus 110 in the launch environment.

Referring now to Figures 2A-2B, shown therein is a cover system 200 for protecting a repeatably separable robotic interface, according to an embodiment. The cover system 200 includes the cover apparatus 100 of Figures 1A-1D. The cover system 100 is shown in a closed configuration in Figure 1A and in an open configuration in Figure 1B.

The separable robotic interface includes a robotic device 102 and a payload 104 with which the robotic device 102 is configured to mate according to a robotic operation or procedure executed by the robotic device 102.

The robotic device 102 may be any suitable robotic device capable of performing autonomous mating and de-mating with payload 104. In an embodiment, the robotic device 102 may be an end effector coupled to a free end of a robotic arm or serial robotic manipulator. In a particular embodiment, the end effector is coupled to a 7DOF robotic arm. It should be understood that robotic device 102 may be part of a larger robotic system configured for payload interactions.

The payload 104 may be any payload, object, or system for which it is desired for the robotic device 102 to mate. For example, the payload 104 may be a tool or other device or system that can be manipulated by robotic device 102 or receive services from or through the robotic device 102. Services may include, for example, the provision of electrical power, data, fuel, or torque through a mated interface.

The robotic device 102 includes a set of one or more robot-side mating connectors 106 (which may be referred to as robotic interface 106) that are configured to mate with a set of one or more payload-side mating connectors 108 (which may be referred to as payload interface 108) on the payload 104. The payload-side mating connectors 108 are only visible in Figure 1B in the open configuration. While the robotic device 102 and payload 104 are shown having two connectors each, it will be understood that the number may vary and is at least one.

The connectors 106 and 108 may be any type of connector configured to establish a mating connection. In an embodiment, the connectors 106 and 108 are electrical connectors configured to facilitate the transfer of electrical power or data across the interface. The electrical connectors may be umbilical connectors. The electrical connectors may be similar to D-sub connectors. In some cases, the payload-side connectors 108 include material that is degradable when exposed to the environmental conditions in which the system 100 is intended to operate (i.e., space environments, such as on-orbit). The payload-side connectors 108 may include material that is sensitive to or degrades in the presence of radiation or atomic oxygen. For example, where the payload-side connectors 108 are electrical connectors, the electrical connectors may include a dielectric material. The dielectric material may be disposed between pins in the connector, such as for protecting the pins from interacting with each other (i.e., acts as an insulator). The dielectric material may be degraded by exposure to radiation or atomic oxygen, rendering the connectors inoperable. Similarly, in other cases, the payload-side connectors 108 may include material that is sensitive to or may be degraded or fouled by debris in the space environment and affect mating.

The robotic device 102 is configured to execute a robotic mating procedure to mate with and de-mate from the payload 104 using mating connectors 106, 108. In some embodiments, the robotic device 102 and the payload 104 may include complementary male and female mating halves of a wedge interface, respectively. The wedge interface may align the robot-side connectors 106 with payload-side connectors 108 as the robotic device 102 enters the wedge interface. It should be noted that when the robotic device 102 first enters the wedge on the payload 104, there may be misalignment (which is corrected as the it progresses into the wedge interface), and features of the cover system 100 (such as actuation tab and actuation bracket, described below) are configured to handle such misalignments.

The robotic device 102 includes a force moment sensor (not shown). The force moment sensor measures forces and moments on the robotic device 102 as the robotic device 102 mates to and de-mates from the payload 104. Where the robotic device 102 is an end effector on a robotic arm, the force moment sensor measures forces and moments experienced at the end effector (i.e., at the tip of the arm). As further described herein, in some embodiments, the actuation force required to open the cover system 100 may be configured to be within a deadband of the force moment sensor so as to not affect control of the mating sequence.

The cover system 100 includes cover apparatus (or cover assembly) 100 and an actuation bracket 112 for opening the cover apparatus 110. The actuation bracket 112 may also be referred to as an actuation finger.

The cover apparatus 110 is mounted to the payload 104 and the actuation bracket 112 is mounted to the robotic device 102. The payload 104 is a non-rotating support structure (as described in reference to Figures 1A-1D) to which the cover apparatus 100 is mounted.

The cover apparatus 100 rotates between the closed configuration (Figure 2A) and the open configuration (Figure 2B).

In the closed configuration, the cover 114 covers the payload-side connectors 108. In the open configuration, the cover apparatus 100 is rotated to move the cover 114 out of the way and expose the payload-side connectors 108. The cover 114 is sized and dimensioned to protect the payload-side connectors 108 such that when closed there is no direct line of sight or viewpoints to radiation. The thickness of the cover 114 may be adjusted for the dosage of radiation expected to handle. The cover 114 includes side walls that are used to fixedly attach (e.g., through bolted interface) the cover 114 to the swing arms 118 and that provide protection to the payload-side connectors 108 against radiation coming from the sides.

Opening of the cover apparatus 100 is driven by an actuation force or actuation stroke supplied by the actuation bracket 112 as the robotic device 102 is driven towards the payload 104 during the mating operation. The actuation force is a linear force represented by arrow 111 in Figure 2B.

The actuation bracket 112 contacts actuation tab 116 of the cover apparatus 110 as the actuation bracket 112 is driven forward via motion of the robotic device 102 towards the payload 104. The linear force applied by the actuation bracket 112 to the actuation tab 116 causes the cover apparatus 100 to rotate about its axis of rotation

More particularly, the actuation tab 116 is connected to and positioned above cover 114 of the cover apparatus 110. Generally, the actuation tab 116 is positioned to provide a target for contact that is above the payload-side connectors 108 when the cover apparatus 110 is closed. The force applied to the actuation tab 116 by the actuation bracket 112 as the actuation bracket 112 contacts and slides along the actuation tab 116 causes the cover apparatus 110 to rotate around the pivot points 120, which moves the cover 114 out of the way and exposes the payload-side connectors 108 (which are located between the swing arms 120 of the cover apparatus 110). The actuation tab 116 is configured to provide a large surface area for the actuation bracket 112 to contact. The target surface of the actuation tab 116 for contact may be as wide as the cover 114. The length of the actuation bracket 112 (i.e., how far beyond the robot-side connectors 106 the actuation bracket extends) provides sufficient axial stroke needed to rotate the cover apparatus 110 so that when the robot-side connectors 106 arrive at the payload-side connectors 108, the cover 114 is fully retracted and not in the way.

The actuation bracket 112 and the actuation tab 116 are configured to accommodate misalignment between the robotic device 102 delivering the actuation bracket 112 and the cover apparatus 110. In doing so, the cover system 100 may be used without additional targets or accuracy. A larger surface area of the actuation tab 116 may accommodate more misalignment. In some embodiments, the actuation bracket may be made narrower to allow for more lateral and roll misalignment capability.

The actuation tab 116 is leaned forward from vertical (perpendicular) when the cover is in the closed position, as shown in Figure 3. Forward leaning the actuation tab 116 in this manner may advantageously minimize force actuation. This keeps the moment arm to the pivot point small. If the actuation tab 116 is vertical, the actuation bracket 112 may hit a lower point on the actuation tab 116 when opening the cover apparatus 110. By angling the actuation tab 116 forward, force and friction are reduced. The selected angle may be an optimum angle as a trade-off of height and moment arm force (i.e., the most efficient angle to reduce the forces). In some embodiments, the most cover rotation per millimeter of actuation bracket 112 movement along axis 304 between 45 degrees and 135 degrees. In such an embodiment, the forward angle of the actuation tab 116 may be selected such that the actuation tab 116 is vertical at the midpoint of actuation bracket 112 travel.

As the cover apparatus 110 rotates about the pivot points 120 to open, torsion springs 122-1 and 122-2 disposed around the pivot points 118-1 and 118-2, respectively, twist and load the torsion springs 122 with torque. The torsion springs 122 may be configured such that when the connectors 106, 108 are fully mated, the torsion springs 122 are fully loaded.

The torsion springs 122 are configured to provide force characteristics needed to keep the actuation force required to fully open the cover apparatus 100 below a desired threshold. For example, the cover actuation force may be kept within a deadband or noise level of a force moment sensor (FMS) of the robotic device. By having the actuation force within the deadband of the FMS, the opening of the cover apparatus 100 is not sensed by the robotic device 102 through the FMS and does not affect the control of the robotic device 102. The springs 122 may need to be very pliant to keep the actuation force sufficiently low.

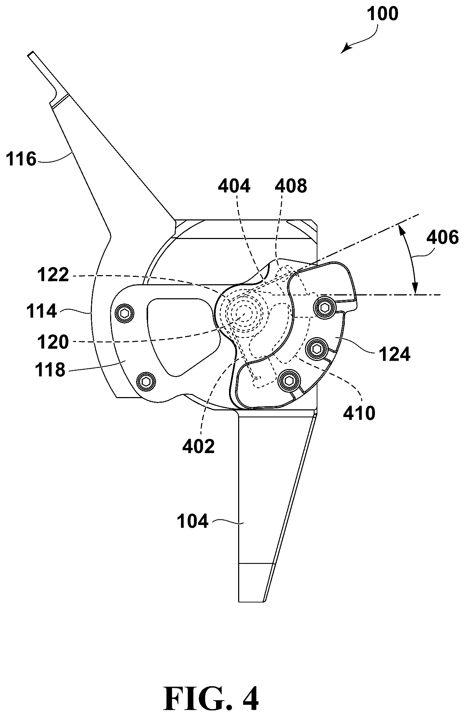

A side view of the cover apparatus 100 on the payload 104 with the side arm 118 and counterweight 124 partially transparent is shown in Figure 4 to illustrate further details of the torsion spring 122. As can be seen, the torsion spring 122 is wrapped around pivot point 120. The torsion spring 122 includes a static spring leg 402 and a moving spring leg 404. Static spring leg 402 is attached to payload 104 and moving spring leg 404 is attached to swing arm 118. Reference numeral 406 illustrates a preload of the torsion spring 122 at the closed position. The preload may be used to help retain the torsion spring 122 in its groove. A hard-stop boss 408 on swing arm 118 interfaces with and moves in a hard-stop kidney slot 410 in the payload 104 as the cover apparatus 100 is opening and closing. The hard stop boss 408 stops and prevents further rotation of the cover apparatus 110 when contacting either end of the hard-stop slot 410 during opening or closing. The hard stop at the closed position may be used to guarantee the preload in the spring 122. The hard stop at the open position may be used to prevent the spring 122 from being overloaded. The hard stop in the open position may also be used to protect hardware behind the cover 114 (e.g., cables, blankets, etc.).

Referring again to Figures 2A-2B, the return of the cover apparatus 100 from the open configuration to the closed configuration is passive and occurs during de-mating of the robot-side connectors 106 from the payload-side connectors 108.

In particular, as the robotic device 102 is de-mating the connectors 106, 108 at the interface by moving or retracting the robotic device 102 away from the payload 104, the actuation bracket 112 is also retracted along with the robotic device 102. As the actuation force from the actuation bracket 112 is removed from the actuation tab 116, the torque loaded in the torsion springs 122 is released, which rotates the cover apparatus 110 about the pivot points 120 back to the closed configuration 102.

The present disclosure provides a cover apparatus and cover system that protects connectors from environmental factors, opens passively as mating to the connectors is happening, and closes passively as de-mating from the connectors is happening. The cover apparatus may be further configured to survive the launch environment using counterweights. The cover apparatus may be further configured to handle or accommodate misalignments of the robotic device and still open the cover. By opening with little force, force from the robotic arm can be dedicated to its servicing or moving of the payload, rather than to opening or closing the cover. The force required from the end effector may be kept small enough that it is within the noise of the force sensors on the end effector.

While the above description provides examples of one or more apparatus, methods, or systems, it will be appreciated that other apparatus, methods, or systems may be within the scope of the claims as interpreted by one of skill in the art.

## Claims

1. A cover apparatus for protecting a vulnerable component in space from environmental damage, the cover apparatus comprising:
a cover that rotates about a pivot point between a closed position and an open position;
a spring mechanism that biases the cover in the closed position;
an actuation tab fixed to the cover and positioned above the cover in the closed position;
wherein applying a push force on the actuation tab rotates the cover about the pivot point to the open position, the push force being sufficient to overcome a spring force of the spring mechanism;
wherein the rotation of the cover to the open position loads the spring mechanism; and
wherein the cover rotates passively from the open position to the closed position using the load in the spring mechanism when the push force on the tab is removed.

2. The cover apparatus of claim 1, wherein the spring mechanism comprises a torsion spring disposed about the pivot point.

3. The cover apparatus of claim 1, wherein the vulnerable component is on a repeatably separable robotic interface.

4. The cover apparatus of claim 3, wherein the repeatably separable robotic interface includes a robotic device and payload, and wherein the vulnerable component is a payload-side connector configured to mate with a robot-side connector on the robotic device as part of a robotic mating operation.

5. The cover apparatus of claim 4, wherein the push force is supplied by an actuation bracket on the robotic device as the robotic device approaches the payload during the robotic mating operation.

6. The cover apparatus of claim 5, wherein the push force required to open the cover and fully expose the payload-side connector is within a deadband of a force senor of the robotic device that senses forces during mating of the payload-side and robot-side connectors.

7. The cover apparatus of claim 1, wherein the cover is circular shaped with the center of its radius coincident with an axis of rotation of the cover defined by the pivot point.

8. The cover apparatus of claim 1, wherein the cover and actuation tab are counterbalanced using a counterweight to reduce movement of the cover in a launch environment.

9. The cover apparatus of claim 8, wherein the counterweight positions the center of rotating mass of the cover and actuation tab coincident with an axis of rotation of the cover defined by the pivot point.

10. The cover apparatus of claim 8, wherein the center of mass of the counterweight is directly opposite the center of mass of the cover and actuation tab through the pivot point.

11. The cover apparatus of claim 1, further comprising first and second swing arms that are fixed to the cover and are pivotably attached to and rotate about the pivot point.

12. The cover apparatus of claim 1, wherein the actuation tab is angled forward from vertical in the closed position.

13. The cover apparatus of claim 1, wherein the push force is applied by a human user.

14. A cover system comprising the cover apparatus of claim 1 and an actuation bracket configured to apply the push force to the actuation tab.

15. The cover system of claim 14, wherein the actuation bracket is mounted on a robotic device and is robotically delivered by the robotic device during a robotic mating operation involving the vulnerable component.
